# EUROPÄISCHE PATENTSCHRIFT

(11) **EP 0 605 851 B1**
(45) Veröffentlichungstag und Bekanntmachung des Hinweises auf die Patenterteilung: **04.06.1997**
(21) Anmeldenummer: 93120790.6
(22) Anmeldetag: 23.12.1993
(51) Int. Cl.: A01B 63/00, A01B 63/22

(54) **Lageregelung für ein an einen Schlepper anhängbares Gerät**
Position control system for tractor towed implement
Réglage de position d'un outil remorqué par un tracteur

(30) Priorität: 08.01.1993 US 1975
(43) Veröffentlichungstag der Anmeldung: 13.07.1994
(73) Patentinhaber: DEERE & COMPANY, Moline, Illinois 61265 (US)
(72) Erfinder: Fox, Robert Eugene, Minburn, Iowa 50167 (US); Smith, William LeRoy, Jr., Des Moines, Iowa 50311 (US); Flugard, Donald R., Jr., Ames, Iowa 50010 (US)
(74) Vertreter: Feldmann, Bernhard

(56) Entgegenhaltungen:
- EP-A- 0 477 041
- US-A- 3 433 309

## Beschreibung

Die Erfindung bezieht sich auf eine Lageregelung für ein an einen Schlepper anhängbares Gerät, das eine Hubwelle und einen Hubzylinder aufweist, über die durch den Hubzylinder drehbare Hubwelle zwischen einem Bereich unterschiedlich tiefer Bodenbearbeitungsstellungen und einem Bereich unterschiedlich hoher Transportstellungen höhenverstellbar ist und das einen in Abhängigkeit von der jeweiligen Höhe des Gerätes unterschiedliche Signale an eine elektronische Steuereinheit abgebenden Wandler mit einem beweglichen Teil aufweist.

Diese Lageregelung (US-A-5 152 347) arbeitet mit einem elektronischen Steuersystem an einem Schlepper, wie es beispielsweise aus der US-A-4 979 092 bekannt ist, zusammen. Von dem zweckmäßig als Drehpotentiometer ausgebildeten Wandler ausgehende Signale gelangen in die elektronische Steuereinheit und werden zum Ansteuern von Magnetventilen genutzt, die im normalen Betrieb ein Höhenverstellen einer am Schlepper vorgesehenen Dreipunktgerätekupplung bewirken. Im normalen Betrieb spricht die elektronische Steuereinheit auf von einem an den Schlepper angebauten Gerät ausgehende Lage- und Zugkraftsignale an. Wird jedoch an den Schlepper ein sich auf Laufrädern abstützendes Bodenbearbeitungsgerät angehängt und eine mit dem Wandler verbundene Leitung in die elektronische Steuereinheit gesteckt, so schaltet diese automatisch von ihrem Steuerbetrieb für die Dreipunktgerätekupplung auf einen Steuerbetrieb für das angehängte Gerät um, dessen Bodenbearbeitungswerkzeuge entsprechend den jeweiligen Anforderungen in unterschiedlichen Bodentiefen arbeiten müssen. Diese werden durch einen Steuerhebel vorgewählt. Am Ende eines Feldes, wenn Schlepper und Gerät gewendet werden, wird das Gerät in seine Transportstellung verstellt und danach wieder abgesenkt. Das Wiederauffinden der genauen Arbeitstiefe bereitet dabei nicht unerhebliche Schwierigkeiten, weil der Tiefenbereich, in dem das Arbeitsgerät im Boden arbeiten kann, im Vergleich zu den Verstellbereich für den Transport relativ klein ist. So ist zum Beispiel eine Scheibenegge in ihrer Arbeitsstellung, in der deren Arbeitswerkzeuge in den Boden eindringen, nur um einige Zoll vertikal verstellbar, wohingegen der Verstellbereich für den Transport 16 bis 20 Zoll beträgt. Sobald die Bodenbearbeitungswerkzeuge - aus welchen Grund auch immer - aus den Boden ausgehoben werden, hängt das Wiederauffinden der vorherigen Stellung von der Genauigkeit und Wiederholbarkeit des Rückkoppelungssignals ab.

Zum Wiederauffinden der Arbeitstiefe ist bereits eine optische Anzeigevorrichtung (US-A-3 433 309) vorgeschlagen worden, über die auf die Arbeitstiefe, mit der das Gerät gerade arbeitet, geschlossen werden kann. Zu der Anzeigevorrichtung gehört eine Anzeigetafel mit einem gegen die Wirkung einer Feder verstellbaren Zeiger. Die Spindel des Zeigers ist mit einem Scheibenrad verbunden, das gegen die Wirkung der Feder von einer Kette nur dann gedreht werden kann, wenn ein doppelseitig beaufschlagbarer Zylinder, über den zum Verstellen des Gerätes eine Hubwelle verdreht wird, eingefahren wird, d. h. nur bei einer Verstellung des Gerätes aus der Transportstellung in die Arbeitsstellung. Bei einer Verstellung des Gerätes aus der Arbeitsstellung in die Transportstellung wird der Zeiger durch die Feder gedreht, wobei die Kette die Rückstellbewegung des Zeigers hemmt.

In diesem Dokument ist ein von Hand in seiner Lage einstellbares Gerät offenbart. Die Anzeigetafel zeigt einen bestimmtem Skalenbereich für die Arbeitstiefe auf. Sie ist nicht mit einem Wandler vergleichbar, der in Abhängigkeit von der Jeweiligen Höhe des Gerätes bestimmte Signale an eine elektronische Steuereinheit ausgibt. Die Anzeige ist außerdem durch ihre Abhängigkeit von einer Kette und einer Feder unpräzise.

Aufgabe der Erfindung ist eine Verbesserung des bekannten Rückkoppelungssystems, weshalb nach der Erfindung vorgesehen ist, daß der Wandler mit Abstand zu der Hubwelle angeordnet ist, die Hubwelle mit einem Schwenkarm drehfest verbunden ist und daß der bewegliche Teil des Wandlers mit dem Schwenkarm derart verbunden ist, daß der bewegliche Wandlerteil in Abhängigkeit von einer vorgegebenen Drehung der Hubwelle in dem Bereich unterschiedlich tiefer Bodenbearbeitungsstellungen um größere Winkel als in dem Bereich unterschiedlich hoher Transportstellungen verdreht wird und daß der bewegliche Wandlerteil in dem Bereich unterschiedlich tiefer Bodenbearbeitungsstellungen einen größeren Drehbewegungsbereich als der Schwenkarm an der Hubwelle aufweist. Auf diese Weise wird im Bereich der unterschiedlich tiefen Bodenbearbeitungsstellungen eine bessere Empfindlichkeit erzielt, so daß eine frühere Einstelltiefe leicht aufgefunden werden kann. Der Bewegungsbereich des beweglichen Wandlerteils ist damit im Bereich der Bodenbearbeitungsstellungen größer als in dem Bereich der Transportstellungen, wodurch die Genauigkeit und Wiederholbarkeit der Rückkoppelungssignale im Bereich der Bodenbearbeitungsstellungen erheblich vergrößert wurde.

In einfacher Weise kann bei einer Lageregelung, bei der der bewegliche Teil des als Potentiometers ausgebildeten Wandlers drehbar ist, ein weiterer Schwenkarm an den beweglichen Wandlerteil drehfest angeschlossen sein, wobei beide Schwenkarme miteinander verbunden sind.

Eine relativ einfache und kostengünstige Lageregelung mit wenigen Verschleißstellen und großer Genauigkeit wird nach einem weiteren Vorschlag der Erfindung dadurch erreicht, daß an beide Schwenkarme eine sie miteinander verbindende Schwinge angelenkt ist, die mit dem weiteren Schwenkarm in dem Bereich unterschiedlich tiefer Bodenbearbeitungsstellungen einen stumpfen Winkel und in dem Bereich unterschiedlich hoher Transportstellungen einen spitzen Winkel bildet. Somit sind lediglich zwei Gelenkstellen in einer relativ kleinen Gestängeverbindung vorgesehen.

Dieses Gestänge erreicht in der untersten Bodenbearbeitungsstellung etwa eine Strecklage, da dann der Winkel zwischen Schwinge und weiterem Schwenkarm annähernd 180° beträgt, wobei der Winkel zwischen der Schwinge und dem Schwenkarm an der Hubwelle in der untersten Bodenbearbeitungsstellung annähernd 90° beträgt.

Im einzelnen können nach der Erfindung die Drehachsen der beiden Schwenkarme zueinander parallel verlaufen und einen gegenseitigen Abstand aufweisen, der größer ist als die Summe der Länge der beiden Schwenkarme zusammen, wobei der Schwenkarm an der Hubwelle eine größere Länge als der Schwenkarm an dem Wandler aufweist.

In der Zeichnung ist ein nachfolgend näher erläutertes Ausführungsbeispiel der Erfindung dargestellt. Es zeigt:
- Fig. 1: ein hydrauliches Steuersystem mit einer Rückkoppelung für ein gezogenes Gerät,
- Fig. 2: eine Hubeinrichtung für das gezogene Gerät mit einem mit einer Hubwelle in Verbindung stehenden Potentiometer und
- Fig. 3: das Verbindungsgestänge zwischen Hubwelle und Potentiometer in verschiedenen Stellungen.

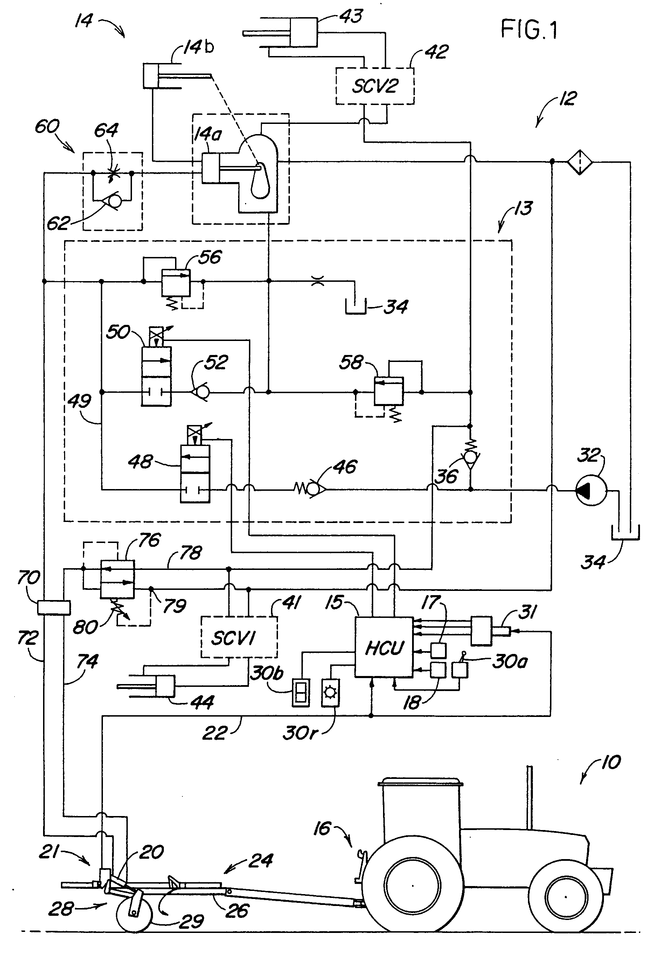

In Fig. 1 der Zeichnung ist ein Schlepper 10 dargestellt, der mit einem hydraulischen Steuersystem 12 ausgerüstet ist. Zu diesem gehört eine Ventilbaugruppe 13 für eine hydraulisch betätigbare und am Schlepper 10 vorgesehene Anhängevorrichtung, die mit einer Hubwellenbaugruppe 14 mit zwei einseitig beaufschlagbaren Hubzylindern 14a und 14b in Verbindung steht. Eine elektronische Steuereinheit HCU für die Anhängevorrichtung ist mit der Ventilbaugruppe 13 verdrahtet, um eine Dreipunktgerätekupplung 16 anheben und absenken bzw. steuern zu können, die mit der Hubwellenbaugruppe 14 verbunden ist. Die elektronische Steuereinheit HCU dient einmal für den Steuerbetrieb der Anhängevorrichtung, indem sie Steuer- oder Rückkoppelungssignale hinsichtlich der Lage- und / oder Zugkräfte von Wandlern 17 und 18 erhält, die in herkömmlicher Weise zur automatischen Positionierung der Gerätekupplung 16 umgesetzt werden.

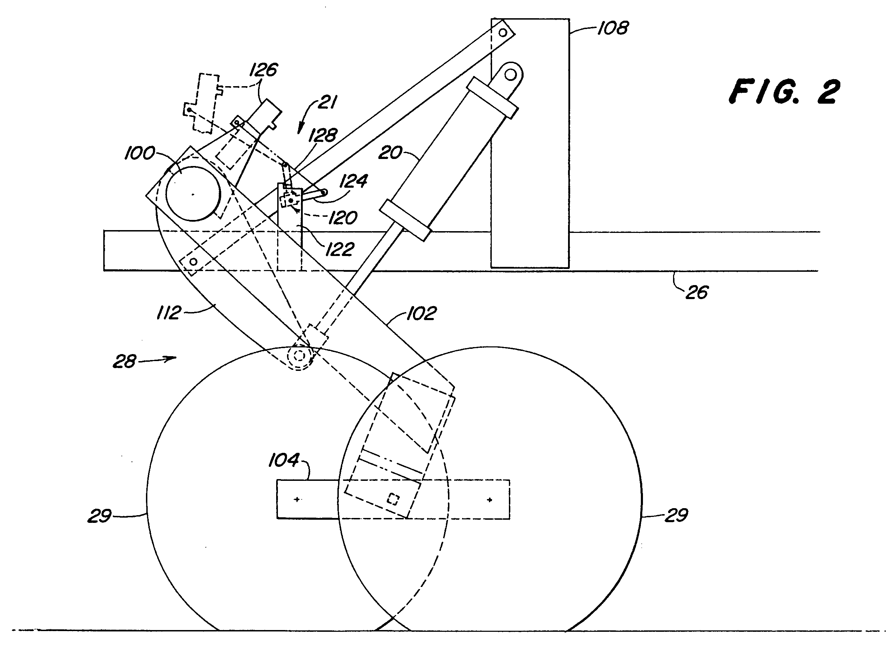

Alternativ ist über die elektronische Steuereinheit HCU auch ein Gerätehubzylinder steuerbar, der in den Fig. 1 und 2 der Zeichnung als Tiefensteuer- und Hubzylinder 20 dargestellt ist. Hierzu gehört ein Rückkoppelungssteuersystem 21, das bei einen Ein- oder Ausfahren des Tiefensteuer- und Hubzylinders 20 bzw. bei der dabei auftretenden Gerätebewegung anspricht, mit einer Rückkoppelungsleitung 22, die über Stecker mit der elektronischen Steuereinheit HCU verbunden ist. Hierbei ist die elektronische Steuereinheit HCU derart ausgebildet, daß sie sich, sobald sie das Vorhandensein eines Rückkoppelungssignals aus der Leitung 22 wahrnimmt, automatisch von ihrem normalen Steuerbetrieb für die Anhängevorrichtung auf einen Steuerbetrieb für das gezogene Gerät umschaltet. In einem solchen Betrieb nutzt die elektronische Steuereinheit HCU das von der Gerätebewegung ausgelöste Lagerückkoppelungssignal anstelle der Rückkoppelungssignale der Anhängevorrichtung hinsichtlich der Lage- oder Zugkräfte, um Steuersignale an die Ventilbaugruppe 13 geben zu können.

Der Gerätehubzylinder gehört zu einem in Fig. 1 dargestellten Gerät 24, das von dem Schlepper 10 gezogen wird und einen Rahmen 26 aufweist. Der Rahmen 26 ist zwischen der gezeigten und ausgehobenen Transportstellung und einer Reihe von unterschiedlich tief abgesenkten Arbeits- bzw. Bodenbearbeitungsstellungen höhenverstellbar, wozu eine herkömmliche Hubvorrichtung 28 mit Hubwelle, Laufrädern 29 und der Tiefensteuer- und Hubzylinder 20 vorgesehen sind. Die Lagesteuerung des Gerätes erfolgt über die elektronische Steuereinheit HCU, an die die Rückkoppelungsleitung 22 angeschlossen ist, die auf einen Steuerbetrieb für das Gerät umschaltet und dann entsprechende Signale für die Höhen- oder Tiefeneinstellung des Gerätes erzeugt. Ein weiterer Bestandteil des Rückkoppelungssystems 21 ist außerdem ein Potentiometer, der bei einer Verstellung der Gerätehubwelle mitverstellt oder gedreht wird, worauf nachfolgend noch näher eingegangen wird, und der Spannungssignale zwischen etwa einem und vier Volt erzeugt, wenn das Gerät 24 an den Schlepper 10 angeschlossen ist.

In seinem Betriebszustand für die Steuerung des gezogenen Gerätes nutzt die elektronische Steuereinheit HCU für die Anhängevorrichtung das Rückkoppelungssignal aus der Leitung 22 zum Höheneinstellen des gezogenen Gerätes im wesentlichen in der gleichen Weise, wie eine herkömmliche Steuereinheit das Lagerückkoppelungssignal der Anhängevorrichtung im normalen Steuerbetrieb der Anhängevorrichtung zum Positionieren der Dreipunktgerätekupplung 16 nutzt. Ein Steuerhebel 30a, über den sonst die Position der Hubwelle im Steuerbetrieb für die Anhängevorrichtung gesteuert wird, steuert auch die Gerätelage in dem Betriebszustand für die Gerätesteuerung. Die Rückkoppelungsleitung 22 und eine Anzeigeeinrichtung 31, vorzugsweise in der Form eines an die Leitung 22 angeschlossenen Voltzählers, erzeugen für die elektronische Steuereinheit HCU und für die Bedienungsperson gute Anzeigen der Geräteposition, so daß die Geräteposition genau wiederholbar ist, wenn das Gerät zwischen seiner ausgehobenen Transportstellung und abgesenkten Arbeitsstellungen zyklisch verstellt wird. Ein Hub- und Senkschalter 30b, der die Hubwelle in dem Steuerbetrieb für die Anhängevorrichtung steuert, steuert das Anheben und Absenken des Gerätes in und aus einer Stellung, die durch den Steuerhebel 30a gewählt wurde, wenn sich die elektronische Steuereinheit HCU für die Anhängevorrichtung in ihrem Steuerbetrieb für das Gerät befindet. Über einen die Höhe begrenzenden Steuerschalter 30r ist die maximale Aushubhöhe der Anhängevorrichtung im Steuerbetrieb für die Anhängevorrichtung und die maximale Aushubhöhe des Gerätes im Steuerbetrieb für das gezogene Gerät wählbar. Während eines Einsatzes im Steuerbetrieb für die Anhängevorrichtung bewirkt eine momentane Bewegung des Schalters 30b in die Hubstellung, daß die Hubwellenbaugruppe 14 oder die Dreipunktgerätekupplung 16 in eine Stellung angehoben wird, wie sie durch dem Steuerschalter 30r bestimmt ist. Über die Hebel und Schalter 30a, 30b und 30r kann die Position des Gerätes 24 leicht in derselben Weise eingestellt werden, wie sie die Position des Anhängevorrichtung einstellen mit der Ausnahme, daß ein Halten des Hub- und Senkschalters 30b in der Hubstellung bei einem Steuerbetrieb für das gezogene Gerät, einen kontinuierlichen hydraulischen Flüssigkeitsfluß bewirkt, so daß mehrere Hubzylinder 20 vollständig ausgefahren und wieder in dieselbe Phase gebracht werden können. Gleichfalls bewirkt ein Loslassen oder Ausklinken des Hub- und Senkschalters 30b in bzw. aus der Hubstellung, daß das Gerät in seiner gegenwärtigen Lage solange verbleibt, bis daß der Hub- und Senkschalter kurzzeitig in die Senkstellung verstellt wurde, damit das Gerät in seine durch den Steuerhebel 30a vorgegebene Stellung zurückkehren kann.

Was das hydraulische Steuersystem 12 anbelangt, so ist es mit einer Quelle (Pumpe 32) für unter Druck stehende hydraulische Flüssigkeit und mit einem Sammelbehälter 34 versehen. Die Pumpe 32 ist über ein Rückschlagventil 36 mit selektiven Steuerventilen 41 bzw. 42 oder SCV1 bzw. SCV2 verbunden, über die Arbeitszylinder 44 bzw. 43 betätigbar sind. Die Pumpe 32 steht des weiteren über ein Rückschlagventil 46 mit einen Solenoid betägtigbaren Drucksteuerventil 48 mit einem Auslaß 49 in Verbindung, der mit dem zylinderseitigen Ende des Hubzylinders 20 verbindbar ist, wenn das Gerät 24 an den Schlepper 10 angeschlossen ist. Der Auslaß 49 steht ferner noch mit einem zweiten Solenoid betätigbaren Drucksteuerventil 50 in Verbindung, über das wahlweise ein Rücklauf zu dem Sammelbehälter 34 über ein Rückschlagventil 52 schaltbar ist. Ein Druck betätigbares Druckbegrenzungsventil 56 ist außerdem zwischen dem Auslaß 49 und dem Sammelbehälter 34 vorgesehen. Ein zweites Druckbegrenzungsventil 58 in der Ventilbaugruppe 13 ist zwischen das Rückschlagventil 36 und dem Sammelbehälter 34 geschaltet.

Ein die Anhängevorrichtung verriegelndes Ventil 60 mit einem Rückschlagventil 62 und einer vollständig schließbaren einstellbaren Drossel 64 ist zwischen dem Auslaß 49 der Ventilbaugruppe 13 und der Hubwellenbaugruppe 14 vorgesehen, über das ein freier Zufluß zu der Hubwellenbaugruppe zum Anheben der Dreipunktgerätekupplung 16 geschaffen ist. Wird jedoch bei diesem Ventil 60 die Drossel 64 vollständig geschlossen, so ist der Rücklauf der hydraulischen Flüssigkeit aus der Hubwellenbaugruppe blockiert, so daß die Dreipunktgerätekupplung 16 in ihrer angehobenen Stellung verbleibt, und zwar unabhängig von Druckschwankungen am Auslaß 49 als Folge eines Betriebes der elektronischen Steuereinheit HCU der Ventilbaugruppe 13. Andererseits ist das Rückschlagventil 62 derart angeordnet, daß der Ventilbaugruppe 13 jegliche Flüssigkeit zur Verfügung gestellt wird, die erforderlich ist, um Leckölverluste oder ähnliches in der Ventilbaugruppe auszugleichen, die ansonsten zu einem Kriechen der Dreipunktgerätekupplung führen könnten.

Die vom Auslaß 49 abgehende Leitung der Ventilbaugruppe 13 ist an einer Anschlußstelle 70 über eine Leitung 72 an das zylinderseitige Ende oder die ausfahrbare Seite des Hubzylinders 20 des Gerätes 24 angeschlossen, und eine Rücklaufleitung 74 ist an die andere oder einfahrbare Seite des Hubzylinders 20 mit ihrem einen Ende und mit ihrem anderen Ende an der Stelle 70 an ein Druckminderungs- oder Entspannungsventil 76 angeschlossen, das einen ersten Anschluß 78 oder eine erste Leitung, der oder die über das Rückschlagventil 36 an die Pumpe 32 angeschlossen ist, und einen zweiten Anschluß 79 oder eine zweite Leitung aufweist, der oder die mit dem Sammelbehälter 34 verbunden ist. Das Ventil 76 hält einen positiven Druck an der Einfahrseite des Hubzylinders 20 aufrecht, wenn die Ausfahrseite des Zylinders 20 über das Steuerventil 50 an den Sammelbehälter 34 angeschlossen ist. Der Druck an der Ausfahrseite, der über eine Steuerung 80 regulierbar ist, ist einstellbar, um gerade ausreichend Druck zu erzeugen, daß der Hubzylinder vollständig eingefahren werden kann (d. h. um beim dargestellten Ausführungsbeispiel die Gerätelaufräder vom Boden fort zu schwenken, wenn die Leitung 72 über das Steuerventil 50 an den Sammelbehälter 34 angeschlossen ist). Wird der Hubzylinder 20 ausgefahren, dann verstellt der Druck in der Leitung 74 das Ventil 76 aus seiner in Fig. 1 gezeigten Stellung in die untere Stellung, so daß Rücklaufflüssigkeit aus der Leitung 74 über den Anschluß 79 in den Sammelbehälter 34 zurückfließen kann.

Ist kein Gerät 24 an den Schlepper 10 angehängt, so ist bei einem normalen Betrieb die Drossel 64 offen, so daß die elektronische Steuereinheit HCU in herkömmlicher Weise arbeiten kann, indem sie die von einer Bedienungsperson vermittels der Schalter und Steuerhebel 30a, 30b und 30r ausgehenden Steuerimpulse und die von den Wandlern 17 und 18 ausgehenden Signale für die Lage- und Zugkraft nutzt, um den Flüssigkeitsfluß zu und von den Hubzylindern 14a und 14b durch wahlweise Aktivierung der Ventile 48 und 50 in der Ventilbaugruppe 13 zu steuern. Um von diesem Betrieb auf den Fernbetrieb eines Zylinders umzuschalten, wie es bei einem anzuhängenden Gerät erforderlich wird, fährt die Bedienungsperson zunächst die Anhängevorrichtung bzw. die Dreipunktgerätekupplung in ihre höchste Stellung und schließt, nachdem der Schlepper 10 abgestellt wurde, die Drossel 64, so daß ein Flüssigkeitsfluß von der Ventilbaugruppe 13 zu der Hubwellenbaugruppe nur noch in Richtung auf die Hubzylinder 14a und 14b möglich ist, damit die Anhängevorrichtung in ihrer ausgehobenen Stellung gehalten wird, auch dann wenn in der Ventilbaugruppe 13 Druckschwankungen auftreten. Anschließend werden die Leitungen 72 und 74 mit der Anschlußstelle 70 verbunden, so daß eine Verbindung mit dem Auslaß 49 bzw. mit der von diesem kommenden Leitung und mit dem Ventil 76 hergestellt wird.

Die Rückkoppelungsleitung 22 wird ebenfalls mit der elektronischen Steuereinheit HCU am Schlepper verbunden, und der Schlepper wird angelassen. Die elektronische Steuereinheit ist daraufhin in der Lage ein Rückkoppelungssignal in der Leitung 22 wahrzunehmen und schaltet auf einen Steuerbetrieb für das gezogene Gerät um. Der Steuerhebel 30a wird hin- und hergeschwenkt, bis der Hubzylinder 20 am Gerät 24 anspricht. Der Steuerhebel 30a steuert nun die Arbeitstiefe des Gerätes, und die Anzeigeeinrichtung 31 zeigt ein Voltrückkoppelungssignal an, so daß der Geräteeinstellwert vermittelt und leicht wieder aufgefunden werden kann. Danach wird beim Hub- und Senkschalter 30b kurzzeitig durch Antippen der Hebeschalter betätigt, wodurch die elektronische Steuereinheit HCU das Ventil 48 aktiviert, um die Kolbenstange des Hubzylinders 20 auszufahren, so daß das Gerät bis auf eine Höhe ausgehoben wird, die durch die Einstellung des Höhenbegrenzungsschalters vorgegeben ist. Sobald diese Höhe erreicht ist, wird das Ventil 48 geschlossen bzw. in seine in Fig. 1 wiedergegebene Stellung zurückgeführt. Wird andererseits der Hub- und Senkschalter 30b in seiner Schaltstellung für Heben gehalten, so wird die Kolbenstange des Hubzylinders vollständig ausgefahren, was in solchen Fällen von Bedeutung sein kann, in denen bei mehreren Zylindern alle Zylinder wieder in dieselbe Phase gebracht werden sollen. Der Kolben eines jeden Hubzylinders kann mit einer nicht gezeigten Phasennut versehen sein, die bei Erreichen des Endhubs eine Flüssigkeitsverbindung zwischen den sich gegenüberliegenden Seiten des Kolbens erlaubt. Ein Loslassen des Schalters 30b in der Stellung für Heben bewirkt, daß die elektronische Steuereinheit HCU das Ventil 48 wieder in seine in Fig. 1 gezeigte Stellung zurückkehren läßt. Während eines Betriebszustandes für Bodenbearbeitungsbetrieb kann der Höhenbegrenzungsschalter 30r so eingestellt werden, daß das Gerät auf eine Höhe ausgefahren wird, in der beispielsweise die Spitzen eines am Geräterahmen 26 angeordneten Bodenbearbeitungswerkzeuges die beim Wenden aufgetretenen Spurrillen des Schleppers entfernen.

Ein Loslassen des Schalters 30b aus seiner Stellung für Heben, bevor der Zylinder 20 vollständig ausgefahren wurde, veranlaßt die elektronische Steuereinheit HCU, das Ventil 48 in seine Stellung nach Fig. 1 zurückzuführen, wobei die gegenwärtige Höhenlage des Gerätes beibehalten wird. Durch kurzzeitiges Antippen der Senktaste des Schalters 30b wird das Ventil 50 aktiviert, und das Gerät senkt sich bis auf die durch den Steuerhebel 30a vorgegebene Stellung ab. Das Ventil 76 ermöglicht es, daß die Laufräder vollständig vom Boden abgehoben werden können, so daß sie das auf den Boden wirkende Gerätegewicht vergrößern, damit bei extrem harten Bodenverhältnissen die Arbeitswerkzeuge besser in den Boden eindringen können.

Um zu einem Betriebszustand für die Anhängevorrichtung zurück zu kommen, wird der Schlepper zunächst abgestellt und die Rückkoppelungsleitung 22 abgeklemmt. Nach einem vollständigen Öffnen der Drossel 64 ist die elektronische Steuereinheit wieder für die Steuerung der Anhängevorrichtung einsetzbar.

Die Hubeinrichtung des Gerätes ist mit einer Hubwelle 100 ausgerüstet, an der ein Hubarm 102 angreift, der sich nach unten und nach vorne zu einem Radträger erstreckt, der die Laufräder 29 aufnimmt bzw. trägt. Aus Fig. 2 ist ferner noch erkennbar, daß der Hubzylinder 20 mit seinem zylinderseitigen Ende an einen hochstehenden Mast 108 angelenkt ist, der seinerseits mit dem Rahmen 26 des gezogenen Gerätes 24 fest verbunden ist. Das kolbenseitige Ende des Hubzylinders 20 ist an einem Arm 112 angelenkt, der seinerseits drehfest an der Hubwelle 100 angreift und zusammen mit der Hubwelle um deren Achse bei Betätigung des Hubzylinders drehbar ist.

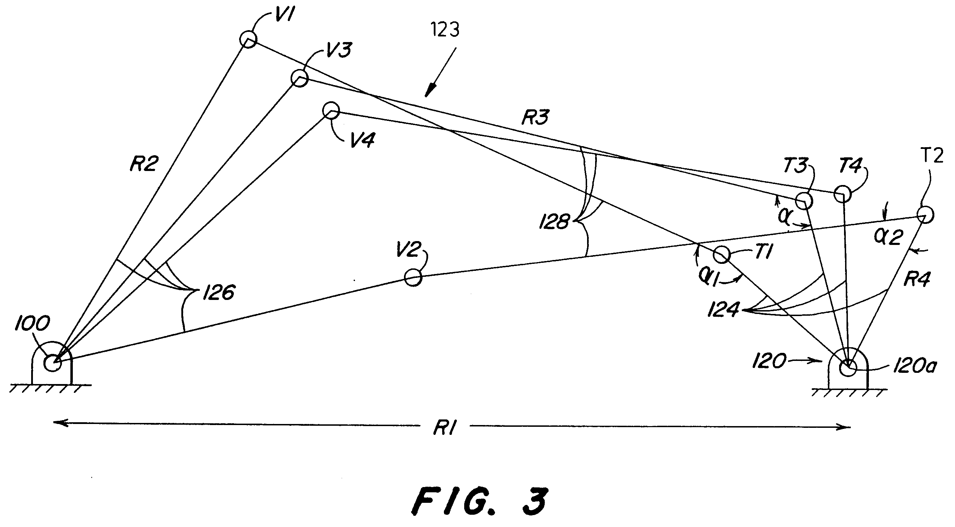

Das Rückkoppelungssteuersystem 21 ist mit einem drehbaren Potentiometer 120 ausgestattet, der auf dem Rahmen 26 vor der Hubwelle 100 an einem hochstehenden Träger 122 angeordnet ist. Die in Fig. 3 erkennbare Achse der Potentiometerwelle 120a verläuft zu der Achse der Hubwelle 100 parallel. Der Potentiometer ist in Abhängigkeit von der Hubwellenverstellung drehbar, wozu eine Gestängeverbindung 123 dient, die derart ausgebildet ist, daß in den unterschiedlich tiefen Bodenbearbeitungsstellungen des Gerätes die Welle 120a des Potentiometers mit Bezug auf die Hubwelle 100 um größere Winkel verdreht wird als in solchen Höhenstellungen, die oberhalb der Bodenbearbeitungsstellungen liegen. In den Bodenbearbeitungsstellungen wird damit die Drehung der Potentiometerwelle verstärkt und in den darüberliegenden Stellungen reduziert.

Zu der Gestängeverbindung 123 gehört ein erster und in den Ansprüchen als weiterer Schwenkarm bezeichneter Schwenkarm 124 mit der Länge R4, der sich von der Welle 120a aus radial nach außen erstreckt, sowie ein zweiter Schwenkarm 126 mit der Länge R2, der mit der Hubwelle 100 verbunden ist und sich von dieser aus gesehen nach oben erstreckt. Der Abstand zwischen der Drehachse der Hubwelle 100 und der der Welle 120a des Potentiometers ist mit R1 bezeichnet. Die Länge R2 ist kleiner als der Abstand R1, und der Abstand R1 ist erheblich größer als die Summe der Längen R2 und R4. Der erste und der zweite Schwenkarm 124, 126 stehen über eine in den Ansprüchen als Schwinge bezeichnete Stange 128 mit der Länge R3 in Verbindung, die an den oberen Enden der Schwenkarme angelenkt ist.

In der Fig. 3 sind mehrere Stellungen der Gestängeverbindung 123 eingezeichnet, die in den verschiedenen Höhenlagen eingenommen werden, wobei die Anlenkstelle der Stange 128 an den ersten Schwenkarm 124 mit T und die Anlenkstelle der Stange 128 an den zweiten Schwenkarm mit V bezeichnet ist. In der am tiefsten liegenden oder vollständig abgesenkten Bodenbearbeitungsstellung sind die Anlenkstellen mit T1 und V1 und in der am höchsten liegenden Transport- oder Aushubstellung sind die Anlenkstellen mit T2 und V2 bezeichnet, d. h. bei einer Aushubbewegung des Gerätes aus seiner am tiefsten liegenden Lage in seine höchste Stellung wird der Schwenkarm 124 und damit die Welle 120a zwischen den Stellungen T1 und T2 verschwenkt. Mit T3 (V3) und T4 (V4) sind weitere Höheneinstellungen bezeichnet, die das Gerät in der Bodenbearbeitungsstellung einnehmen kann. In der am tiefsten liegenden Bodenbearbeitungsstellung entsteht zwischen einer die Anlenkpunkte T1 und V1 verbindenden Geraden und einer die Mittelachse der Welle 120a des Potentiometers 120 mit der Anlenkstelle T1 verbindenden Geraden ein stumpfer Winkel Alpha 1, der fast 180° beträgt, aber kleiner als 180° ist. In der am höchsten liegenden Transport- oder Aushubstellung ist dieser Winkel spitz und mit Alpha 2 bezeichnet. Der entsprechende Winkel zwischen der Stange 128 und den zweiten Schwenkarm 126 ist in der am tiefsten liegenden Bodenbearbeitungsstellung etwas größer als 90° und in der am höchsten liegenden Transport- oder Aushubstellung etwas kleiner als 180°.

Aus der Fig. 3 ist zu entnehmen, daß der Verstellbereich der Welle 120a des Potentiometers 120 in den Bodenbearbeitungsstellungen wesentlich größer ist, als in den ausgehobenen Stellungen. Hier ist der Verstellbereich vergleichsweise reduziert. Dies läßt sich beispielweise dann erreichen, wenn für R folgende Abmessungen gewählt werden:
- R1 =: 25, 4 mm
- R2 =: 11, 81 mm
- R3 =: 16, 51 mm
- R4 =: 5, 26 mm

Bei einer Anordnung der Gestängeverbindung 123 nach den Fig. 2 und 3 resultiert eine Drehung der Hubwelle 100 von 10° in den Bodenbearbeitungsstellungen in einer Drehung der Welle 120a des Potentiometers 120 von mehr als 30°. Andererseits wird eine Drehung der Hubwelle 100 von 10° in den ausgehobenen Transportstellungen nur in eine Drehung der Welle 120a des Potentiometers 120 von etwa 8° umgesetzt. In etwa ist damit mehr als die Hälfte des Drehbereiches der Potentiometerwelle den Bodenbearbeitungsstellungen zugeordnet, obwohl die Vertikalverstellung des Gerätes in den Bodenbearbeitungsstellungen etwa nur einem Drittel oder weniger der gesamten Vertikalverstellung entspricht. Die Gestängeverbindung 123 hat nur wenige Anlenk- oder Gelenkpunkte, ist damit äußerst einfach ausgebildet mit wenigen Verschleißstellen, so daß sie präzise verstellbar ist, ohne daß die Gefahr besteht, daß sie sich leicht lockern kann. Durch den großen Verstellbereich des Potentiometers in den Bodenbearbeitungsstellungen läßt sich die Genauigkeit und Wiederholbarkeit der Rückkoppelungssignale wesentlich erhöhen.

## Patentansprüche

1. Lageregelung für ein an einen Schlepper (10) anhängbares Gerät (24), das eine Hubwelle (100) und einen Hubzylinder (20) aufweist, über die durch den Hubzylinder (20) drehbare Hubwelle (100) zwischen einem Bereich unterschiedlich tiefer Bodenbearbeitungsstellungen und einem Bereich unterschiedlich hoher Transportstellungen höhenverstellbar ist und das einen in Abhängigkeit von der jeweiligen Höhe des Gerätes unterschiedliche Signale an eine elektronische Steuereinheit abgebenden Wandler mit einem beweglichen Teil (120a) aufweist, dadurch gekennzeichnet, daß der Wandler mit Abstand zu der Hubwelle (100) angeordnet ist, die Hubwelle (100) mit einem Schwenkarm (126) drehfest verbunden ist und daß der bewegliche Teil (120a) des Wandlers mit dem Schwenkarm (126) derart verbunden ist, daß der bewegliche Wandlerteil (120a) in Abhängigkeit von einer vorgegebenen Drehung der Hubwelle (100) in dem Bereich unterschiedlich tiefer Bodenbearbeitungsstellungen um größere Winkel als in dem Bereich unterschiedlich hoher Transportstellungen verdreht wird und daß der bewegliche Wandlerteil (120a) in dem Bereich unterschiedlich tiefer Bodenbearbeitungsstellungen einen größeren Drehbewegungsbereich als der Schwenkarm (126) an der Hubwelle (100) aufweist.

2. Lageregelung nach Anspruch 1, wobei der bewegliche Teil (120a) des Wandlers drehbar ist, dadurch gekennzeichnet, daß ein weiterer Schwenkarm (124) an den beweglichen Wandlerteil (120a) drehfest angeschlossen ist und beide Schwenkarme (124, 126) miteinander verbunden sind.

3. Lageregelung nach Anspruch 2, dadurch gekennzeichnet, daß an beide Schwenkarme (124, 126) eine sie miteinander verbindende Schwinge (128) angelenkt ist, die mit dem weiteren Schwenkarm (124) in dem Bereich unterschiedlich tiefer Bodenbearbeitungsstellungen einen stumpfen Winkel und in dem Bereich unterschiedlich hoher Transportstellungen einen spitzen Winkel bildet.

4. Lageregelung nach Anspruch 3, dadurch gekennzeichnet, daß der in der untersten Bodenbearbeitungsstellung zwischen Schwinge (128) und weiterem Schwenkarm (124) gebildete Winkel annähernd 180° beträgt.

5. Lageregelung nach Anspruch 3, dadurch gekennzeichnet, daß der Winkel zwischen der Schwinge (128) und dem Schwenkarm (126) an der Hubwelle (100) in der untersten Bodenbearbeitungsstellung annähernd 90° beträgt.

6. Lageregelung nach einem oder mehreren der vorherigen Ansprüche, dadurch gekennzeichnet, daß die Drehachsen der beiden Schwenkarme (124, 126) zueinander parallel verlaufen und einen gegenseitigen Abstand aufweisen, der größer ist als die Summe der Länge der beiden Schwenkarme (124, 126) zusammen.

7. Lageregelung nach Anspruch 6, dadurch gekennzeichnet, daß der Schwenkarm (126) an der Hubwelle (100) eine größere Länge als der Schwenkarm (124) an dem Wandler aufweist.

## Claims

1. Position control system for a tractor- (10) towed implement (24) which has a rockshaft (100) and a lifting cylinder (20), can be adjusted in height via the rockshaft (100) which can be rotated by the lifting cylinder (20) between a range of field-working positions of differing depth and a range of transport positions of differing height and which has a transducer with a movable portion and sending different signals to an electronic control unit depending on the respective height of the implement,
**characterised in that**
the transducer is arranged at a distance from the rockshaft (100), the rockshaft (100) is connected to a swivel arm (126) to rotate with it, and in that the movable portion (120a) of the transducer is connected to the swivel arm (126) in such a way that the movable transducer portion (120a) is rotated in dependence on a predetermined rotation of the rockshaft (100) by greater angles in the range of field-working positions of differing depth than in the range of transport positions of differing height, and in that the movable transducer portion (120a) has a greater range of rotational movement in the range of field-working positions of differing depth than the swivel arm (126) on the rockshaft (100).

2. Position control system according to claim 1, the movable portion (120a) of the transducer being rotatable, **characterised in that** a further swivel arm (124) is connected to rotate with the movable transducer portion (120a) and the two swivel arms (124, 126) are connected to one another.

3. Position control system according to claim 2, **characterised in that** there is coupled to the two swivel arms (124, 126) an oscillating link (128) connecting them to one another and forming with the additional swivel arm (124) an obtuse angle in the range of field-working positions of differing depth and an acute angle in the range of transport positions of differing height.

4. Position control system according to claim 3, **characterised in that** the angle formed in the lowest field-working position between oscillating link (128) and additional swivel arm (124) amounts to almost 180°.

5. Position control system according to claim 3, **characterised in that** the angle between the link (128) and the swivel arm (126) on the rockshaft (100) amounts to almost 90° in the lowest field-working position.

6. Position control system according to one or more of the preceding claims, **characterised in that** the rotational axes of the two swivel arms (124, 126) run parallel to one another and are at a distance from one another which is greater than the sum of the lengths of the two swivel arms (124, 126) together.

7. Position control system according to claim 6, **characterised in that** the swivel arm (126) on the rockshaft (100) is of greater length than the swivel arm (124) on the transducer.

## Revendications

1. Système de réglage de position pour un appareil (24) pouvant être accroché à un tracteur (10) et qui comporte un arbre de levage (100) et un vérin de levage (20), est réglable en hauteur au moyen de l'arbre de levage (20), qui peut être entraîné en rotation par le vérin de levage (100), entre une gamme de positions basses de travail du sol et une gamme de positions élevées différentes de transport, et possède un convertisseur qui délivre, à une unité de commande électronique, des signaux différents en fonction de la hauteur respective de l'appareil et comporte une partie mobile (120a), caractérisé en ce que le convertisseur est disposé à distance de l'arbre de levage (100), que l'arbre de levage (100) est relié solidairement en rotation à un bras pivotant (126) et que la partie mobile (120a) du convertisseur est reliée au bras pivotant (126) de telle sorte que la partie mobile (120a) du convertisseur pivote en fonction d'une rotation prédéterminée de l'arbre de levage (100), dans la gamme de positions basses différentes de travail du sol, sur des angles plus importants que dans la gamme de positions élevées différentes de transport et que la partie mobile (120a) du convertisseur possède, dans la gamme des positions basses différentes de traitement du sol, une plage de déplacement en rotation plus étendue que le bras pivotant (126) situé sur l'arbre de levage (100).

2. Système de réglage de position selon la revendication 1, dans laquelle la partie mobile (120a) du convertisseur peut tourner, caractérisé en ce qu'un autre bras pivotant (124) est raccordé solidairement en rotation à la partie mobile (120a) du convertisseur et que les deux bras pivotants (124, 126) sont reliés entre eux.

3. Système de réglage de position selon la revendication 2, caractérisé en ce que sur les deux bras pivotants (124, 126) est articulée une bielle oscillante (128), qui relie ces bras entre eux et fait avec l'autre bras pivotant (124), un angle obtus dans la gamme des positions basses différentes de travail du sol et un angle aigu dans la gamme des positions élevées différentes.

4. Système de réglage de position selon la revendication 3, caractérisé en ce que l'angle formé entre la bielle oscillante (128) et l'autre bras pivotant (124) dans la position la plus basse de travail du sol, est égal approximativement à 180°.

5. Système de réglage de position selon la revendication 3, caractérisé en ce que l'angle entre la bielle oscillante (128) et le bras pivotant (126) situé sur l'arbre de levage (100) est égal approximativement à 90°, dans la position la plus basse de travail du sol.

6. Système de réglage de position selon une ou plusieurs des revendications précédentes, caractérisé en ce que les axes de rotation des deux bras pivotants (124, 126) sont essentiellement parallèles et sont séparés par une distance qui est supérieure à la somme des longueurs des deux bras pivotants (124, 126).

7. Système de réglage de position selon la revendication 6, caractérisé en ce que le bras pivotant (126) situé sur l'arbre de levage (100) possède une longueur supérieure à celle du bras pivotant (124) situé sur le convertisseur.
